# EUROPÄISCHE PATENTSCHRIFT

(11) **EP 2 873 513 B1**
(45) Veröffentlichungstag und Bekanntmachung des Hinweises auf die Patenterteilung: **15.11.2017**
(21) Anmeldenummer: 13005425.7
(22) Anmeldetag: 19.11.2013
(51) Int. Cl.: B29C 65/34, F16L 47/03

(54) **Elektroschweissrohrverbindungsformteil**
Moulded connection component for electrically welded tubes
Pièce moulée de liaison de conduite électrosoudable

(43) Veröffentlichungstag der Anmeldung: 20.05.2015
(73) Patentinhaber: Georg Fischer Rohrleitungssysteme AG, 8201 Schaffhausen (CH)
(72) Erfinder: Breyer, Markus, 78315 Radolfzell (DE); Rösch, Jürgen, 79853 Lenzkirch (DE); Bürgi, Stefan, 8254 Basadingen (CH); Muckenschnabel, Harald, 78224 Singen (DE); Raible, Moriz, 88662 Überlingen (DE); Hunnekuhl, Jörg, 79798 Jestetten (DE)
(74) Vertreter: Fenner, Seraina

(56) Entgegenhaltungen:
- CH-A5- 675 851
- DE-A1- 2 848 382
- DE-A1-102011 108 603
- JP-A- H03 277 894
- JP-A- 2003 090 485
- JP-A- 2003 097 784

## Beschreibung

Die Erfindung betrifft ein Elektroschweissrohrverbindungsformteil insbesondere ein Elektroschweissnippel zum Verbinden von vorzugsweise mindestens zwei Rohrleitungen bzw. Rohrleitungsendabschnitten, vorzugsweise vorisolierte Kunststoffrohrleitungen bzw. Kunststoffrohrleitungsendabschnitte, enthaltend einen Kupplungskörper aus Kunststoff vorzugsweise zylindrisch ausgebildet, mindestens eine Heizdrahtwicklung, wobei die Heizdrahtwicklung an der Mantelaussenfläche des Kupplungskörpers angeordnet Ist, wobei die Heizdrahtwicklung die Schweisszonen bildet und die Heizdrahtwicklung derart angeordnet ist, dass beidseitig der Heizdrahtwicklung bzw. der Schweisszone jeweils eine Kaltzone angeordnet ist.

JP 2003 097784 A und JP 2003 090485 A offenbaren ein solches Elektroschweissrohrverbindungsformteil.

Heute werden vermehrt Rohrleitungen aus thermoplastischem Kunststoff eingesetzt, da sie einerseits vielen negativen Einflüssen der Umwelt widerstehen und beständig gegenüber zahlreichen aggressiven Stoffen sind, wie auch ihr geringes Gewicht und ihre Flexibilität die Handhabung wesentlich erleichtert.

Zur Verbindung solcher Rohrleitungen werden meist Elektroschweissfittings eingesetzt wie sie aus dem Stand der Technik bekannt sind.

Die EP 0 698 474 B1 offenbart eine solche Elektroschweissmuffe, bei welcher die zu verbindenden Kunststoffrohre über ihren Aussenumfang mittels Elektroschweissmuffe miteinander verbunden werden,

Nachteilig an solchen Muffen Ist, dass sie sich schlecht oder nur mit grossem Aufwand für vorisolierte Rohrleitungen einsetzten lassen. Bei Anwendungen von Kunststoffrohrleitungen bei denen eine gute Isolierung des Mediums gegenüber der Umgebung gefordert ist, wie beispielsweise bei Rohrleitungssystemen für Transport von Kühlträgem werden meist vorisolierte Rohrleitungen eingesetzt. Solche, mittels einer Elektroschweissmuffe zu verbinden, bedingt der Abisolierung des Isolationsmaterials an den jeweiligen Rohrleitungsendabschnitten um die Elektroschweissmuffe an den Innenrohren zu befestigen und so die Rohrleitungsabschnitte zu verbinden. Zudem muss anschliessend die Muffe ebenfalls isoliert werden, dazu wird meist ein Mantel aus Isolationsmaterial um die Muffe herum angelegt.

Aus dem Stand der Technik sind Verbindungselement bekannt, die ohne ein Abisolieren der wärmeisolierten Rohrleitungen einsetzbar sind. Aus der EP 1 511 960 B2 ist ein Rohrverbindungsformteil bekannt, welches in die zu verbindenden Innenrohre der vorisolierten Rohrleitungen eingesteckt wird und so als Kupplungsstück dient.

Nachteilig ist jedoch, dass durch die blosse Steckverbindung keine optimale Dichtheit sowie keine nicht einfach lösbare Verbindung entsteht. Aus der DE 296 17 559 U1 ist eine Steckverbindung bekannt, die elektroschweissbar ist und die vorgehend erwähnten Nachteile aufhebt. Bei solchen Schweissverbindungen Ist es üblich, dass wie aus dem zuvor erwähnten Elektroschweissfitting EP 0 688 474 B1 gezeigt ein Schweissindikator an der Muffe angeordnet ist, welcher anzeigt ob die Schweissung durchgeführt wurde oder nicht.

Um dies zu gewährleisten ist der Schweissindikator im Bereich der Schweisszone eines Fittings angeordnet, dadurch hat eine getätigte Schweissung eine direkte Auswirkung auf den Indikator, da durch die Schmelzung des Kunststoffs direkt angezeigt wird, dass eine Schweissung erfolgt ist. Dies wiederum ist bei einem einsteckbaren Formteil zur Rohrleitungsverbindung wie aus der DE 296 17 559 U1 nicht möglich, da ein Indikator im Bereich der Schweisszone ein Einstecken der Rohrleitung behindern würde, weshalb bei dem vorhergehend erwähnten Einsteckfitting keine Indikation einer durchgeführten Schweissung erfolgen kann.

Es ist Aufgabe der Erfindung ein Elektroschweissrohrverbindungsformteil vorzuschlagen, welches ein Abisolieren einer Wärmeisolatlonsschicht an den zu verbindenden Rohrleitungsendabschnitten nicht benötlgt sowie von aussen ersichtlich sein muss, ob eine Schweissung bereits erfolgt ist.

Diese Aufgabe wird erfindungsgemäss dadurch gelöst, dass im Bereich der Kaltzone ein Schweissindikator angeordnet ist, wobei der Schweissindikator als Anzeigestift ausgebildet ist. Dle zu verbindenden Rohrleitungen, welche vorzugsweise bereist vorisoliert sind, brauchen zur Verbindung nicht abisoliert zu werden. Die Rohrleitungen werden auf den Kupplungskörper des Elektroschweissrohrverbindungsformteils aufgeschoben, vorzugsweise erfolgt dies bel zwei zu verbindenden Rohrleitungen von beiden Seiten des Elektroschweissrohrverbindungsformteils. Die Rohrleitungen werden über die Schweisszonen des Elektroschwelssrohrverbindungsformteils geschoben, vorzugsweise bis zu einem Anschlag. Damit der Schweissindikator das Aufschieben der zu verbindenden Rohrleitungen nicht behindert, ist der Schweisslndlkator nicht im Bereich der Schweisszone angeordnet, sondern In der Kaltzone. Eine solche Lösung ist aus dem Stand der Technik nicht bekannt. Bekannte Schweissverbindungsformteile weisen einen in der Schweisszone angeordneten Schweissindikator auf, da dieser direkt mitreagiert, wenn der darunter liegende Kunststoff sich durch die Erwärmung durch die Heizdrahtwicklung ausdehnt.

Die vorliegende Erfindung hat den Vorteil, dass der Schwelssindikator das Aufschieben der Rohrleitungsendabschnitte nicht behindert aber trotz der Anordnung des Indikators in der Kaltzone signalisiert ob eine Schweissung durchgeführt wurde.

Das Elektroschweissrohrverbindungsformteil weist mindestens zwei Heizdrahtwicklungen bzw. zwei Schwelsszonen auf, wobei der Schweissindikator vorzugsweise in der Kaltzone zwischen den Schweisszonen angeordnet ist.

Der Schweissindikator ist als Anzeigestift ausgebildet und ist vorzugsweise am Aussenumfang des Kupplungskörpers angeordnet. Vorteilhafterweise ist der Anzeigestift in einer dafür vorgesehenen zylindrischen Vertiefung im Kunststoffmaterial angebracht. In der Regel befindet sich nur ein Anzeigestift am Elektroschweissrohrverbindungsformteil, da ein Stift ausreicht um anzuzeigen ob die Schweissung durchgeführt wurde oder nicht, jedoch ist die Anordnung weiterer Stifte denkbar und müsste auch in der Kaltzone erfolgen.

Die Anordnung des Indikators erfolgt in der Kaltzone da über die Schweisszone die zu verschweissenden Rohrenden geschoben werden, weshalb ein Indikator bzw. ein Anzeigestift dort nicht anbringbar ist. Das Anzeigen, ob eine Schweissung stattgefunden hat oder nicht, erfolgt indem der Stift sich aus der Vertiefung erhebt bzw. heraustritt. Dazu wird unter dem Anzeigestift ein gewisser Schmelzdruck benötigt der eine bestimmte Temperatur voraussetzt. Aus dem Stand der Technik war das bisher nur erzielbar wenn der Indikator am Aussenumfang einer Muffe im Bereich der Schweisszone angeordnet ist. Die Wärme zur Schweissung in der Wicklung bzw. der Schweisszone bewirkt auch am Aussenumfang eine so hohe Temperatur, dass der Schmelzdruck unterhalb des Anzeigestifts erhöht und den Anzeigestift dadurch hinaus trelbt, Belm erflndungsgemässen Elektroschweissrohrverbindungsformteil ist jedoch der Schweissindikator am Aussenumfang des Kupplungskörpers im Bereich einer Kaltzone angeordnet.

Bei einer bevorzugten Ausführungsform Ist der Schweissindikator im Bereich der Kaltzone angeordnet, welche sich zwischen den Schweisszonen befindet. Das ermöglicht ein problemloses Aufschieben der zu verschweissenden Rohrenden auf den Kupplungskörper. Der Anzeigestift befindet sich vorzugsweise in der Mitte des Kupplungskörpers.

Selbstverständlich sind auch mehrere Rohrendenabschnitte als nur zwei miteinander verbindbar. Durch ein erfindungsgemässes Elektroschweissrohrverbindungsformteil, welches beispielsweise einen Kupplungskörper aufweist der als Kreuz ausgebildet ist und sich dadurch vier Rohrenden miteinander verbinden lassen. Auch dort ist der Anzeigestift in der Kaltzone angeordnet, vorzugsweise in der Mitte der Anschlüsse.

Die Schweisszonen der Heizdrahtwicklung sind miteinander verbunden. Dadurch verläuft der Heizdraht, der der Verbindung der Schweisszonen dient, durch die dazwischen liegende Kaltzone in welcher der Anzeigestift angeordnet ist. Der Indikator ist an der Mantelaussenfläche bzw. am Aussenumfang des Kupplungskörpers im Bereich der Kaltzone angeordnet, wo auch der Heizdraht die Kaltzone durchquert und der durch seine Erwärmung den benötigten Schmelzdruck liefert.

Der Heizdraht verläuft nicht in einer blossen geraden Linie unterhalb des Anzeigestifts, sondern er verläuft In elnem gewissen Bereich möglichst flächendeckend. Einen blossen geraden Verlauf des Heizdrahts durch die Kaltzone würde zur Erreichung des benötigten Schmelzdrucks nicht ausreichen.

Vorzugsweise verläuft der Heizdraht zum Erreichen des Schmelzdrucks für den Indikator In der Kaltzone zwischen Schweisszone derart, dass er im Bereich einer Segmentfläche der Mantelaussenfläche des Kupplungskörpers möglichst flächendeckend. Das heisst, dass der Helzdraht unterhalb des Anzeigestifts auf der Mantelaussenfläche des Kupplungskörpers, welcher in einer zylindrischen Vertiefung im Kunststoffmaterial angeordnet ist, verläuft. Wobei der Kupplungskörper zum Schutz der Heizdrahtwicklung mit einem Schutzmantel umfasst ist, der die Heizwicklung einerseits vor Verschmutzungen schütz und andererseits auch vor ungewollten Verschiebungen der Heizdrahtwicklung bewahrt. Um eine gewisse Segmentfläche mit dem Heizdraht möglichst gut abzudecken wird der Heizdraht vorzugsweise mäanderförmig oder sinusförmig über dle Segmentfläche angeordnet, wodurch die benötigte Temperatur zum Erzeugen des erforderlichen Schmelzdruckt erreicht wird. Vorteilhaft ist es, wenn der Heizdraht sich selbst nirgends berührt.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Draufsicht eines Kupplungskörpers des Elektroschweissrohrverbindungsformteil mit eingelegtem Heizdraht,
- Fig. 2: einen Längsschnitt durch ein Elektroschweissrohrverbindungsformteil und
- Fig. 3: einem Längsschnitt durch ein eingebautes Elektroschweissrohrverbindungsformteil.

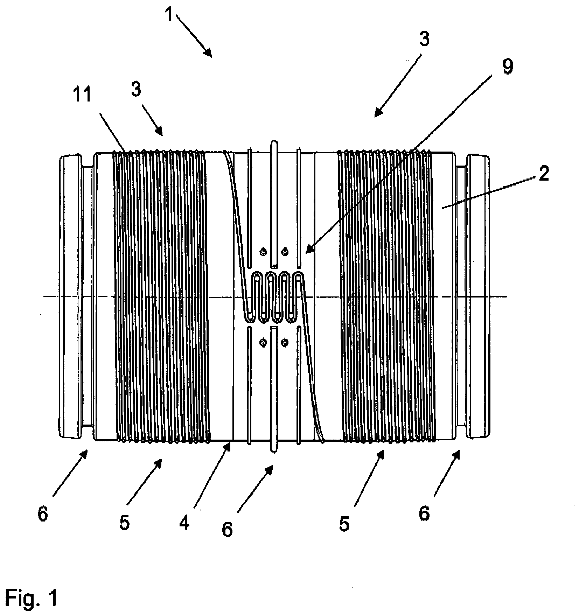

Fig. 1 zeigt eine Draufsicht auf einen Kupplungskörper 2 eines erfindungsgemässen Elektroschweissrohrverbindungsformteils 1. Um den Verlauf des Heizdrahtes 11 zu erkennen wurde in Fig. 1 auf die Darstellung des Schutzmantels 8 verzichtet.

Der Kupplungskörper 2 ist aus Kunststoff hergestellt. Entlang der Mantelaussenfläche 4 verläuft der Heizdraht 11 um das Erwärmen des Kunststoffs und damit die Verschweissung des Elektroschweissrohrverbindungsformteil 1 mit der zu verbindenden Rohrleitung 12 zu ermöglichen. Der Draht 11 verläuft als Heizdrahtwicklung 3 entlang der Mantelaussenfläche 4 des Kupplungskörpers 2. Durch die Heizdrahtwicklung 3 wird eine Schweisszone 5 gebildet, Das heisst, dass der Heizdraht 11, der in den Bereichen in denen er zur Heizdrahtwicklung 3 aufgewunden ist als Schweisszone 5 dient. In Fig. 1 ist ein Elektroschweissnippel dargestellt, der als Verbindungsformteil für zwei Rohrleitungsendabschnitte dient, wobei auch Verbindungsformteile für mehr als zwei Rohrleitungsendabschnitte denkbar sind. Der Heizdraht 11, welcher an der Mantelaussenfläche 4 des 5 Kupplungskörpers 2 verläuft ist vorzugsweise in einer entsprechenden Nut angeordnet. Dadurch kann ein Verrutschen des Heizdrahtes 11 bzw. der Heizdrahtwicklung 3 vermieden werden. Das Elektroschweissrohrverbindungsformteil 1 weist Schweisszonen 5 sowie Kaltzonen 6 auf. Die Kaltzonen 6 sind an den Enden des Kupplungskörpers 2 angeordnet sowie zwischen den Schweisszonen 5 bzw. den Heizdrahtwicklungen 3. Vorzugsweise sind die Heizdrahtwicklungen 3 mittels Heizdraht 11 untereinander verbunden. Der Heizdraht 11 verläuft durch die Kaltzone 6, welche zwischen den Schweisszonen 5 angeordnet ist. Da der Schweissindikator 7 (in Fig. 1 nicht dargestellt) in der Kaltzone 6 angeordnet ist, bedingt es dort ebenfalls einer gewissen Heizleistung, damit der Indikator 7 auf eine durchgeführte Schweissung reagiert. Dies wird erreicht Indem der Heizdraht 11 im Bereich des Indikators 7 bzw, unterhalb des Indikators 7 über eine bestimmte Segmentfläche 9 möglichst flächendeckend angeordnet ist. Eine mögliche Ausführungsform bzw. einen möglichen Verlauf des Heizdrahts 11 ist eine mäander-oder sinusförmige Anordnung, wie in Fig. 1 abgebildet. Es sind jedoch auch andere Drahtverläufe vorstellbar, vorzugsweise berührt sich der Heizdraht 11 nirgends selbst.

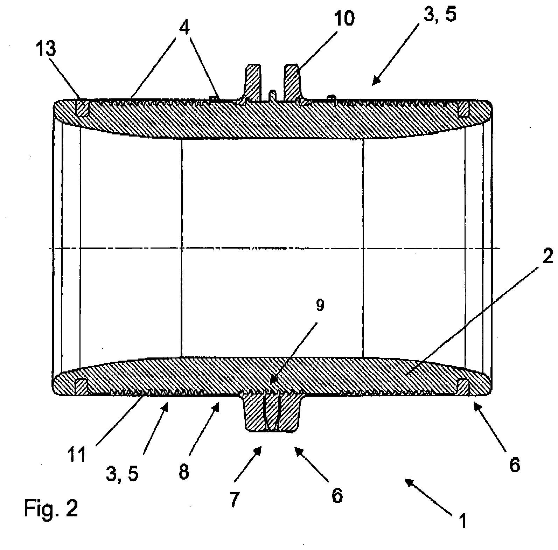

Fig. 2 zeigt ein erfindungsgemässes Elektroschweissrohrverbindungsformteil 1 im Längsschnitt. Am Kupplungskörper 2 angeordnet ist der Heizdraht 11, welcher zu einer Heizdrahtwicklung 3 aufgewickelt ist und diese als Schweisszone 5 dient. Wie bereits zuvor erwähnt, verläuft der Heizdraht 11 in einer Nut, welche an der Mantelaussenfläche 4 des Kupplungskörpers 2 angeordnet ist. Zum Schutz der Wicklung 3 ist darüber ein Schutzmantel 8, ebenfalls aus Kunststoff, angeordnet. Er schützt die Heizdrahtwicklung 3 vor Verunreinigungen vor dem Einbau sowie er auch das Ablösen des Drahtes 11 vom Kupplungskörper 2 verhindert. Vorzugsweise weist das Elektroschweissrohrverbindungsformteil 1 Anschläge 10 auf, die gewährleisten, dass die Rohrleitungsendabschnitte 12 bzw. die Rohrleitungsendabschnitte des Innenrohres 14 genügend weit auf das Elektroschweissrohrverbindungsformteil 1 aufgeschoben sind. Damit der Schutzmantel 8 sich nicht von der Mantelaussenfläche 4 des Elektroschweissrohrverbindungsformteil 1 löst, wird er vorzugsweise an den beiden Enden des Kupplungskörpers 2 in einer Nut 13 durch Verdickung dessen Querschnitts befestigt. Dadurch kann auch die Rohrleitung 12 bzw. das Innenrohr 14 problemlos auf den Kupplungskörper 2 aufgeschoben werden, ohne den Schutzmantel 8 abzuschleben.

Der Schweissindikator 7 befindet sich in der Kaltzone 6 des Elektroschweissrohrverbindungsformteils 1, vorzugsweise in der Kaltzone 6, die zwischen den Schweisszonen 5 angeordnet ist. Der Schweissindikator 7 ist als Anzeigestift ausgebildet und in einer Vertiefung Im Kunststoffmaterial angeordnet. Unterhalb des Indikators 5 verläuft der Heizdraht 11, welcher die beiden Heizdrahtwicklungen 3 bzw. Schweisszonen 5 miteinander verbindet. Um den benötigten Schmelzduck zu erzielen, damit der Indikator 7 sich erhebt bzw. eine durchgeführte Schweissung anzeigt, ist es notwendig, dass eine gewisse Heizleistung bzw. Temperatur erzielt wird um den benötigten Schmelzdruck zu erreichen. Deshalb wird im Bereich der Segmentfläche 9 unterhalb des Indikators 7 einen möglichst flächendeckenden Verlauf des Heizdrahtes 11 wie aus Fig. 1 erkennbar ist, benötigt.

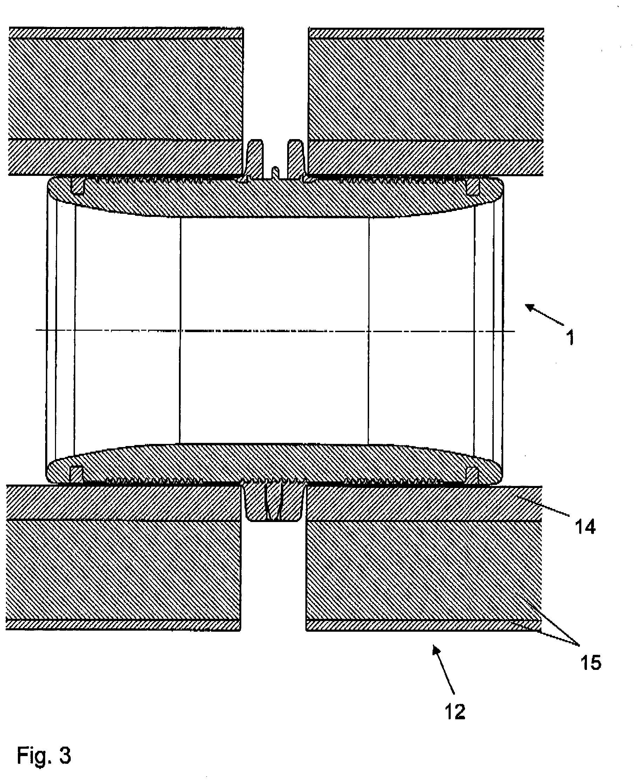

Fig. 3 zeigt einen Längsschnitt durch ein Elektroschweissrohrverbindungsformteil 1, welches in eine isolierte Rohrleitung 12 eingebaut ist. Es ist gut erkennbar, dass kein Abisolieren der Rohrleitung 12 von Nöten ist um das Elektroschweissrohrverbindungsformteil 1 anzubringen. Das Elektroschweissrohrverbindungsformteil 1 kann durch blosses Einschieben und anschllessendes Verschweissen angebracht werden, die Dämmschicht mit der Schutzschicht 15 muss dazu nicht entfernt werden und der Schwelssindikator 7 ist gut ersichtlich.

### Bezugszeichenliste

- 1: Elektroschweissrohrverbindungsformteil
- 2: Kupplungskörpers
- 3: Heizdrahtwicklung
- 4: Mantelaussenfläche
- 5: Schweisszone
- 6: Kaltzone
- 7: Schweissindikator
- 8: Schutzmantel
- 9: Segmentfläche
- 10: Anschlag
- 11: Heizdraht
- 12: Rohrleitung I Rohrleitungsendabschnitt
- 13: Nut / Querschnittsverdickung
- 14: Innenrohr
- 15: Dämmschicht mit Schutzmantel

## Patentansprüche

1. Elektroschweissrohrverbindungsformteil (1) insbesondere ein Elektroschweissnippel zum Verbinden von vorzugsweise mindestens zwei Rohrleitungen bzw. Rohrleitungsendabschnitten, vorzugsweise vorisolierter Kunststoffrohrleitungen bzw. Kunststoffrohrleitungsendabschnitte, enthaltend einen Kupplungskörper (2) aus Kunststoff vorzugsweise zylindrisch ausgebildet, mindestens eine Heizdrahtwicklung (3), wobei die Heizdrahtwicklung (3) an der Mantelaussenfläche (4) des Kupplungskörpers (2) angeordnet ist, wobei die Heizdrahtwicklung (3) die Schweisszonen (5) bildet und die Heizdrahtwicklung (3) derart angeordnet ist, dass beidseitig der Heizdrahtwicklung (3) bzw. der Schweisszone (5) jeweils eine Kaltzone (6) angeordnet ist, **dadurch gekennzeichnet, dass** im Bereich der Kaltzone (6) ein Schweissindikator (7) angeordnet ist, wobei der Schweissindikator als Anzeigestift ausgebildet ist.

2. Elektroschweissrohrverbindungsformteil (1) nach Anspruch 1, **dadurch gekennzeichnet, dass** das Elektroschweissrohrverbindungsformteil (1) mindestens zwei Heizdrahtwicklungen (3) bzw. Schweisszonen (5) aufweist.

3. Elektroschweissrohrverbindungsformteil (1) nach einem der Ansprüche 1 oder 2, **dadurch gekennzeichnet, dass** im Bereich der Kaltzone (6) zwischen den Schweisszonen (5) ein Schweissindikator (7) angeordnet ist, vorzugsweise an der Mantelaussenfläche (4) des Kupplungskörpers.

4. Elektroschweissrohrverbindungsformteil (1) nach einem der Ansprüche 1 bis 3, **dadurch gekennzeichnet, dass** die Schweisszonen (5) der Heizdrahtwicklung (3) mittels Heizdraht (11) miteinander verbunden sind.

5. Elektroschweissrohrverbindungsformteil (1) nach einem der vorhergehenden Ansprüche, **dadurch gekennzeichnet, dass** der Heizdraht (11) zur Verbindung der Schweisszonen (5) in bzw. durch die Kaltzone (6) verläuft.

6. Elektroschweissrohrverbindungsformteil (1) nach einem der vorhergehenden Ansprüche, **dadurch gekennzeichnet, dass** der Heizdraht (11) in der Kaltzone (6) zwischen den Schweisszonen (5) im Bereich einer Segmentfläche (9) der Mantelaussenfläche (4) des Kupplungskörpers (2) möglichst flächendeckend verläuft, vorzugsweise ohne sich selbst zu berühren.

7. Elektroschweissrohrverbindungsformteil (1) nach einem der vorhergehenden Ansprüche, **dadurch gekennzeichnet, dass** der Heizdraht (11) in der Kaltzone (6) zwischen den Schweisszonen (5) im Bereich einer Segmentfläche (9) der Mantelaussenmantelfläche (4) des Kupplungskörpers (2) mäanderförmig oder sinusförmig verläuft.

## Claims

1. Moulded electric-welding pipe connection component (1), in particular electric-welding nipple for connecting preferably at least two pipelines or pipeline end sections, preferably pre-insulated plastic pipelines or plastic pipeline end sections, comprising a coupling body (2) of plastic, preferably cylindrically formed, at least one heating wire winding (3), the heating wire winding (3) being arranged on the outer lateral surface (4) of the coupling body (2), the heating wire winding (3) forming the welding zones (5) and the heating wire winding (3) being arranged in such a way that a cold zone (6) is arranged on each of the two sides of the heating wire winding (3) or the welding zone (5), **characterized in that** a welding indicator (7) is arranged in the region of the cold zone (6), the welding indicator being formed as an indicating pin.

2. Moulded electric-welding pipe connection component (1) according to Claim 1, **characterized in that** the moulded electric-welding pipe connection component (1) has at least two heating wire windings (3) or welding zones (5).

3. Moulded electric-welding pipe connection component (1) according to either of Claims 1 and 2, **characterized in that** a welding indicator (7) is arranged in the region of the cold zone (6) between the welding zones (5), preferably on the outer lateral surface (4) of the coupling body.

4. Moulded electric-welding pipe connection component (1) according to one of Claims 1 to 3, **characterized in that** the welding zones (5) of the heating wire winding (3) are connected to one another by means of heating wire (11).

5. Moulded electric-welding pipe connection component (1) according to one of the preceding claims, **characterized in that** the heating wire (11) for connecting the welding zones (5) runs into or through the cold zone (6).

6. Moulded electric-welding pipe connection component (1) according to one of the preceding claims, **characterized in that**, in the cold zone (6) between the welding zones (5), the heating wire (11) runs as far as possible in an area-covering manner, preferably without touching itself, in the region of a segmental area (9) of the outer lateral surface (4) of the coupling body (2).

7. Moulded electric-welding pipe connection component (1) according to one of the preceding claims, **characterized in that**, in the cold zone (6) between the welding zones (5), the heating wire (11) runs in a meandering or sinusoidal form in the region of a segmental area (9) of the outer lateral surface (4) of the coupling body (2).

## Revendications

1. Pièce moulée de liaison de conduite électrosoudable (1) en particulier un raccord électrosoudable pour relier de préférence au moins deux conduites ou sections de conduite, de préférence des conduites en matière plastique ou des sections de conduites en matière plastique préisolées, contenant un corps d'accouplement (2) en matière plastique conçu de préférence cylindrique, au moins un enroulement de fil de chauffage (3), l'enroulement de fil de chauffage (3) étant disposé sur la surface extérieure d'enveloppe (4) du corps d'accouplement (2), l'enroulement de fil de chauffage (3) formant les zones de soudage (5) et l'enroulement de fil de chauffage (3) étant disposé de telle sorte qu'une zone froide (6) est respectivement disposée des deux côtés de l'enroulement de fil de chauffage (3) ou de la zone de soudage (5), **caractérisée en ce que** dans le secteur de la zone froide (6) est disposé un indicateur de soudage (7), l'indicateur de soudage étant constitué sous la forme d'une cheville d'indication.

2. Pièce moulée de liaison de conduite électrosoudable (1) selon la revendication 1, **caractérisée en ce que** la pièce moulée de liaison de conduite électrosoudable (1) comporte au moins deux enroulements de fil de chauffage (3) ou zones de soudage (5).

3. Pièce moulée de liaison de conduite électrosoudable (1) selon l'une quelconque des revendications 1 ou 2, **caractérisée en ce que** dans le secteur de la zone froide (6) un indicateur de soudage (7) est disposé entre les zones de soudage (5), de préférence sur la surface extérieure d'enveloppe (4) du corps d'accouplement.

4. Pièce moulée de liaison de conduite électrosoudable (1) selon l'une quelconque des revendications 1 à 3, **caractérisée en ce que** les zones de soudage (5) de l'enroulement de fil de chauffage (3) sont reliées entre elles au moyen d'un fil de chauffage (11).

5. Pièce moulée de liaison de conduite électrosoudable (1) selon l'une quelconque des revendications précédentes, **caractérisée en ce que** le fil de chauffage (11) pour relier les zones de soudage (5) passe dans ou à travers la zone froide (6).

6. Pièce moulée de liaison de conduite électrosoudable (1) selon l'une quelconque des revendications précédentes , **caractérisée en ce que** le fil de chauffage (11) passe dans la zone froide (6) entre les zones de soudage (5) dans le secteur d'une surface segmentée (9) de la surface extérieure d'enveloppe (4) du corps d'accouplement (2), si possible en recouvrant la surface, de préférence sans se toucher.

7. Pièce moulée de liaison de conduite électrosoudable (1) selon l'une quelconque des revendications précédentes, **caractérisée en ce que** le fil de chauffage (11) passe sous forme de méandres ou sous forme sinusoïdale dans la zone froide (6) entre les zones de soudage (5) dans le secteur d'une surface segmentée (9) de la surface extérieure d'enveloppe (4) du corps d'accouplement (2).
